# EUROPEAN PATENT APPLICATION

(11) **EP 1 967 553 A1**
(43) Date of publication of application: **10.09.2008**
(21) Application number: 06832461.5
(22) Date of filing: 09.11.2006
(51) Int. Cl.: C09C 3/12, C01B 33/149

(54) **WATER-REPELLENT INORGANIC POWDER AND PROCESS FOR PRODUCTION THEREOF**

(30) Priority: 28.12.2005 JP 2005377091
(71) Applicant: AGC Si-Tech Co., Ltd., Fukuoka 808-0027 (JP)
(72) Inventor: INOUE, Masaki, Fukuoka 808-0027 (JP); FUJII, Atsunari, Fukuoka 808-0027 (JP); SASAKI, Takayoshi, Fukuoka 808-0027 (JP)
(74) Representative: Müller-Boré & Partner Patentanwälte
(86) International application number: PCT/JP2006/322400
(87) International publication number: WO 2007/077673

(57) **Abstract**

To provide a stable water-repellent inorganic powder which is substantially free from re-dissolution of a silicon compound used for surface treatment whether an organic solvent is polar or non-polar.

A water-repellent inorganic powder which is surface-treated with a silicon compound, wherein the silicon compound is one having a group reactive with the inorganic powder, and when the inorganic powder is dispersed in any of polar organic solvents and non-polar organic solvents, the retention of the silicon compound is at least 90%. Preferably, the silicon compound is an aqueous emulsion of any of methylhydrogen silicone oil, alkoxy-modified silicone oil, amino-modified silicone oil, epoxy-modified silicone oil, polyether-modified silicone oil or carboxyl-modified silicone oil, and to the aqueous emulsion, at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.

## Description

### TECHNICAL FIELD

The present invention relates to a water-repellent inorganic powder and a process for its production. More particularly, it relates to a stable water-repellent inorganic powder which is obtainable by treating an inorganic powder or the like as a base material with a silicon compound, and a process for its production.

### BACKGROUND ART

Heretofore, fine inorganic particles (hereinafter sometimes referred to as "inorganic powder") such as silica gel particles, alumina particles, titanium oxide particles, titanium nitride particles, calcium carbonate particles, talc particles or hydroxyapatite particles, have been used suitably as e.g. a filler, a pigment, a catalyst or the like to be incorporated to cosmetics, resins, coating materials, printing inks, rubbers, etc. In such a case, it is necessary to impart water repellency to the inorganic powder so that it will be well dispersed in a cosmetic component or resin component as the matrix.

Many methods are known to treat an inorganic powder for water repellency. Among them, a method to impart water repellency by treatment with a silicon compound such as silicone oil is one of the most typical methods (e.g. Patent Documents 1 to 3 and Non-Patent Document 1).

In such a method, usually, silicone oil dissolved in an organic solvent is added to an inorganic powder, followed by stirring and mixing and then by heating to remove the organic solvent and at the same time to carry out formation and baking of a coating film of silicone oil.

However, this method uses an organic solvent such as methanol or ethyl acetate as a dispersing medium (solvent) for silicone oil, and the organic solvent used may not be discharged to the atmosphere, whereby a step of recovering it after coating the inorganic powder with silicone oil will be necessary. Further, by a study made by the present inventors, it has been found that in a case where the specific surface area and the pore volume of the inorganic powder are small, water repellency can be obtained even with a relatively small amount of silicone oil, but as the inorganic powder becomes more porous, and its specific surface area and pore volume become large, the treatment tends to fluctuate, whereby there will be a problem that no adequate water repellency can be obtained unless a large amount of silicone oil is added.

Further, a method has also been proposed wherein an amino-modified silicone oil is added to an inorganic powder without any solvent, and the silicone oil is forcibly kneaded into the powder surface by a shearing low speed kneader such as a pulverizer, and further crushed by e.g. a hammer mill (e.g. Patent Document 4). However, by the application of the shearing force, the treated powder is necessarily mashed and deformed, whereby it is difficult to carry out the surface treatment while maintaining the shape of particles. Thus, such a method is not a commonly applicable method.

Further, by a study made by the present inventors, it has been found that even with a water-repellent inorganic powder obtained by surface treatment with silicone oil, when such an inorganic powder is dispersed in various organic solvents to be blended at the time of its practical use, the coating film of silicone oil formed on its surface may undergo re-dissolution and may not stably be dispersed depending upon the type of e.g. a polar or non-polar organic solvent.
Patent Document 1: JP-A-10-245546
Patent Document 2: JP-A-2003-183027
Patent Document 3: JP-A-5-339518
Patent Document 4: JP-A-2004-182729
Non-Patent Document 1: "SILICONE HANDBOOK", edited by Kunio Ito (NIKKAN KOGYO SHIMBUNSHA, 1990, p.156-157)

### DISCLOSURE OF THE INVENTION

### OBJECT TO BE ACCOMPLISHED BY THE INVENTION

It is an object of the present invention to provide a stable water-repellent inorganic powder which is substantially free from re-dissolution of a silicon compound such as silicone oil used in the surface treatment in an organic solvent whether the organic solvent is polar or non-polar, and a process for producing the water-repellent inorganic powder, wherein the water repellent treatment of such an inorganic powder is carried out efficiently by using an aqueous emulsion of the silicone oil without using an organic solvent as the dispersing medium for the silicone oil.

The present inventors have conducted an extensive study from such a viewpoint and have found that in the case of treating an inorganic powder for water repellency, by using an aqueous emulsion of silicone oil which has not been usually used and by selecting a specific silicone oil for use, it has been surprisingly found that it is possible to obtain a stable water-repellent inorganic powder which has adequate water repellency and which is substantially free from re-dissolution in any of polar organic solvents and non-polar organic solvents. The present invention has been accomplished on the basis of this discovery.

### MEANS TO ACCOMPLISH THE OBJECT

According to the present invention, the following water-repellent organic powder will be provided.
(1) A water-repellent inorganic powder which is surface-treated with a silicon compound, wherein the silicon compound is one having a group reactive with the inorganic powder, and when the inorganic powder is dispersed in any of polar organic solvents and non-polar organic solvents, the retention of the silicon compound is at least 90%.
(2) The water-repellent inorganic powder according to (1), wherein the silicon compound is an aqueous emulsion of any of methylhydrogen silicone oil, alkoxy-modified silicone oil, amino-modified silicone oil, epoxy-modified silicone oil, polyether-modified silicone oil or carboxyl-modified silicone oil.
(3) The water-repellent inorganic powder according to (2), wherein to the aqueous emulsion, at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.
(4) The water-repellent inorganic powder according to (1) or (2), wherein the mass ratio, based on the solid content, of the silicon compound to the inorganic powder (i.e. the mass of the silicon compound/the mass of the inorganic powder) is from 0.1/100 to 20/100.
(5) The water-repellent inorganic powder according to (1), wherein the inorganic powder is porous particles having a specific surface area of from 5 to 2,000 m²/g and a pore volume of from 0.01 to 5.0 ml/g.
(6) The water-repellent inorganic powder according to any one of (1) to (5), wherein the inorganic powder is a spherical silica gel or an irregular silica gel.
(7) A process for producing the water-repellent inorganic powder as defined in (1), which comprises a first step of adding to an inorganic powder an aqueous emulsion of a silicon compound having a group reactive with the inorganic powder, followed by mixing and stirring in a substantially dried state for surface-treating the inorganic powder, and a second step of heating the treated inorganic powder to bake the silicon compound to the surface of the inorganic powder and at the same time, separating the aqueous medium of the aqueous emulsion.
(8) The process for producing the water-repellent inorganic powder according to (7), wherein the silicon compound is an aqueous emulsion of any of methylhydrogen silicone oil, alkoxy-modified silicone oil, amino-modified silicone oil, epoxy-modified silicone oil, polyether-modified silicone oil or carboxyl-modified silicone oil.
(9) The process for producing the water-repellent inorganic powder according to (8), wherein to the aqueous emulsion, at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.
(10) The process for producing the water-repellent inorganic powder according to (7) or (8), wherein the mass ratio, based on the solid content, of the silicon compound to the inorganic powder (i.e. the mass of the silicon compound/the mass of the inorganic powder) is from 0.1/100 to 20/100.
(11) The process for producing the water-repellent inorganic powder according to (7), wherein the inorganic powder is porous particles having a specific surface area of from 5 to 2,000 m²/g and a pore volume of from 0.01 to 5.0 ml/g.
(12) The process for producing the water-repellent inorganic powder according to any one of (7) to (11), wherein the surface treatment in the first step is carried out from 1 minute to 6 hours.
(13) The process for producing the water-repellent inorganic powder according to any one of (7) to (12), wherein the heat treatment in the second step is carried out at from 50 to 250°C from 30 minute to 12 hours.
(14) The process for producing the water-repellent inorganic powder according to any one of (7) to (13), wherein the inorganic powder is a spherical silica gel or an irregular silica gel.

### EFFECTS OF THE INVENTION

According to the present invention, it is possible to provide an inorganic powder treated for stable water repellency, which is substantially free from re-dissolution of a silicon compound such as silicone oil used for the surface treatment, in an organic solvent whether the organic solvent is polar or non-polar. Further, according to the present invention, it is possible to provide a process for producing the stable water-repellent inorganic powder, whereby treatment of an inorganic powder for water repellency is effectively carried out by using an aqueous emulsion of the silicone oil without using an organic solvent as the dispersing medium for the silicone oil.

### BRIEF DESCRIPTION OF THE DRAWING

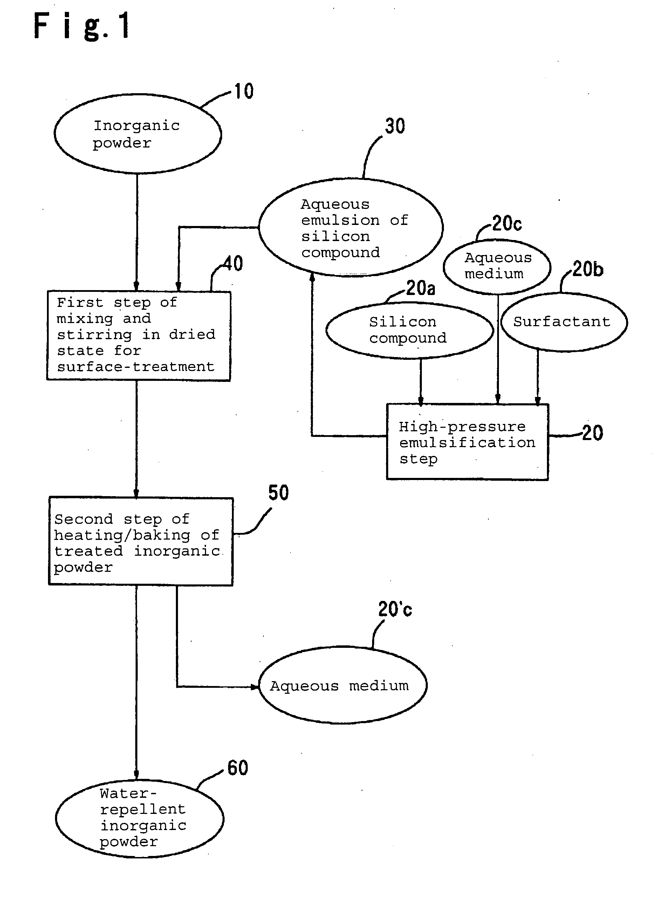

Fig. 1 is a flow sheet illustrating the process for producing the water-repellent organic powder of the present invention.

### MEANING OF SYMBOLS

10: Inorganic powder
20: High-pressure emulsification step
20a: Silicon compound
20b: Surfactant
20c: Aqueous medium
20'c: Aqueous medium
30: Aqueous emulsion of silicon compound
40: First step of mixing and stirring in dried state for surface-treatment
50: Second step of heating/baking of treated inorganic powder
60: Water-repellent inorganic powder

### BEST MODE FOR CARRYING OUT THE INVENTION

Now, the present invention will be described in detail with reference to the drawing.

Fig. 1 is a flow sheet illustrating the process for producing the water-repellent inorganic powder of the present invention. This process comprises a first step 40 of adding to an inorganic powder 10 as the base material an aqueous emulsion 30 of a silicon compound, followed by mixing and stirring in a substantially dried state to carry out surface treatment of the powder, and a second step 50 of heating and baking the treated inorganic powder. In the second step, the aqueous medium 20'c is separated and removed, whereby a water-repellent inorganic powder 60 is obtained. Here, the aqueous emulsion 30 of a silicon compound is preferably prepared by subjecting a silicon compound 20a, a surfactant 20b and an aqueous medium 20c to high-pressure emulsification 20.

### INORGANIC POWDER

In the present invention, the inorganic powder 10 to be treated for water repellency is not particularly limited. However, fine particles of the following compounds may, for example, be mentioned.

Silica (including silica gel, white carbon, aerosil and amorphous silica), mica, talc, sericite, kaoline, clay, bentonite, activated carbon, carbon black, etc.;
oxides such as titanium oxide (anatase-type, rutile-type), zinc oxide, magnesium oxide, ferrous oxide, ferric oxide, aluminum oxide (alumina), chromium oxide, cobaltous oxide, tricobalt tetroxide, cobaltic oxide, nickel oxide (II), nickel oxide (III), tungsten oxide, molybdenum oxide, manganese dioxide, manganese trioxide, uranium oxide, thorium oxide, barium oxide, yttrium oxide, zirconium oxide, cuprous oxide, cupric oxide, stannous oxide, stannic oxide, lead monoxide, tri-lead tetroxide, lead dioxide, antimony trioxide, antimony tetroxide, niobium oxide, ruthenium oxide, barium titanate, silver oxide, and germanium oxide;
hydroxides such as aluminum hydroxide, magnesium hydroxide, zirconium hydroxide, titanium hydroxide, and chromium hydroxide;
halides such as aluminum chloride, titanium chloride, zirconium chloride and calcium fluoride;
sulfates or sulfides, such as barium sulfate, magnesium sulfate, calcium sulfate, aluminum sulfate, titanium sulfate, strontium sulfate, zinc sulfide, cadmium sulfide, antimony sulfide, calcium sulfide, silver sulfide, germanium sulfide, cobalt sulfide, tin sulfide, lead sulfide, nickel sulfide, manganese sulfide, and zinc sulfide;
phosphates such as calcium phosphate, hydroxyapatite and aluminum phosphate;
nitrides such as silicon nitride, boron nitride, magnesium nitride, titanium nitride, aluminum nitride, iron nitride, vanadium nitride, zirconium nitride and tantalum nitride;
silicon compounds or silicates such as molybdenum silicate, barium silicate, magnesium silicate, strontium silicate, aluminum silicate and zeolite;
carbonates such as calcium carbonate and magnesium carbonate;
carbides such as silicon carbide, titanium carbide, tantalum carbide, zirconium carbide, tungsten carbide, molybdenum carbide, hafnium carbide, chromium carbide, vanadium carbide, boron carbide, uranium carbide and beryllium carbide;
gold, silver, palladium, rhodium, iridium, rhenium, ruthenium, osmium, etc.; nickel, copper, zinc, tin, cobalt, iron, aluminum, molybdenum, manganese, tungsten, gallium, indium, technetium, titanium, zirconium, cerium, tantalum, niobium, hafnium, etc.;
an aluminum-magnesium alloy, an iron-carbon alloy, an iron-copper alloy, an iron-nickel-chromium alloy, a silver-gold alloy, a palladium-gold alloy, a silver-palladium alloy, a copper-nickel alloy, a nickel-cobalt alloy, a nickel-magnesium alloy, a tin-lead alloy, etc.

The average particle size of such an inorganic powder is not particularly limited. However, it is usually at a level of from 0.01 to 1,000 µm, preferably from 0.1 to 100 µm, more preferably from 1 to 50 µm. In this specification, the average particle size means an average particle size based on the volume.

The above inorganic powder is preferably porous particles or modified to be porous. Such porous particles are ones having a specific surface are of preferably from 5 to 2,000 m²/g, more preferably from 10 to 800 m²/g. Further, they are porous particles having a pore volume of preferably from 0.01 to 5.0 ml/g, more preferably from 0.01 to 2.0 ml/g. Here, the specific surface area is one measured by BET method, and the pore volume is one measured by a mercury injection method or the like.

The shape of the inorganic powder is not particularly limited, and it may be any of globular, spherical, ellipsoidal, irregular, pulverized, cylindrical, pelletized, angular, needle-like, columnar, crushed, scale-like, leaf-like, flaky, plate-like, crenated and polygonal. For example, the inorganic powder is preferably spherical silica gel or irregular silica gel.

### SILICON COMPOUND

The silicon compound to be used in the present invention is one having a high affinity to the inorganic powder, which is capable of covering the surface of fine inorganic particles by contact, deposition, adsorption, etc. on the surface and capable of being baked and fixed on the surface of the inorganic powder in the next heating step to provide stable water repellency, and one having a group reactive with the inorganic powder. For example, in a case where the inorganic powder is silica gel, it preferably has a group reactive with a silanol group on the silica gel surface. As such a silicon compound, a so-called silicone oil (or polysiloxane) represented by the following formula (1) is preferred. In the following, a case wherein silicone oil is used as the silicon compound, will be described as an example.

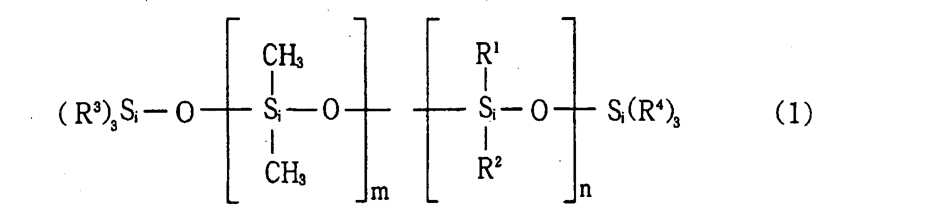

In the formula (1), each of R¹, R², R³ and R⁴ which are independent of one another, is selected from hydrogen, a C₁₋₃₀ alkyl group, an epoxy group, an amino group, a carboxyl group, an alkoxy group, a phenyl group, a polyoxyalkylene group, a polyether group, a mercapto group and an aryl group. Further, m is an integer of from 1 to 450, and n is 0 or an integer of from 1 to 450. However, all of R¹, R², R³ and R⁴ are not alkyl groups and/or phenyl groups.

Further, in the formula (1), one wherein R¹ and R² are substituents, will be referred to as a side chain type, and one wherein R³ and R⁴ are substituents, will be referred to as a terminal type. One wherein either one of R³ and R⁴ is a substituent, will be referred to as a single terminal type, and one wherein both R³ and R⁴ are substituents will be referred to as a both terminal type.

The silicone oil represented by the formula (1) may typically be, for example, methyl hydrogen silicone oil, alkoxy-modified silicone oil, amino-modified silicone oil, epoxy-modified silicone oil, polyether-modified silicone oil or carboxyl-modified silicone oil.

### STRAIGHT SILICONE OIL

One having the formula (1) wherein each of R¹, R², R³ and R⁴ is hydrogen, an alkyl group or a phenyl group (provided that all of R¹, R², R³ and R⁴ are not alkyl groups and/or phenyl groups).

The straight silicone oil may, for example, be methylhydrogen silicone oil (R¹=H, R², R³, R⁴=CH₃), ethylhydrogen silicone oil (R¹=H, R²=C₂H₅, R³, R⁴=CH₃), isopropylhydrogen silicone oil (R¹=H, R²=C₃H₇, R³, R⁴=CH₃), butylhydrogen silicone oil (R¹=H, R²=C₄H₉, R³, R⁴=CH₃), amylhydrogen silicone oil (R¹=H, R²=C₅H₁₁, R³, R⁴=CH₃), hexylhydrogen silicone oil (R¹=H, R²=C₆H₁₃, R³, R⁴=CH₃), laurylhydrogen silicone oil (R¹=H, R²=C₁₁H₂₃, R³, R⁴=CH₃), stearylhydrogen silicone oil (R¹=H, R²=C₁₇H₃₅, R³, R⁴=CH₃), or phenylhydrogen silicone oil (R¹=ϕ (ϕ represents a phenyl group, the same applies hereinafter), R²=H, R³, R⁴=CH₃).

### MODIFIED SILICONE OIL

As the so-called modified (reactive) silicone oil, preferred is one having an epoxy group such as a glycidyl group or a glycidoxyethyl glycidoxypropyl; an amino group such as an amino group, a methylamino group, a dimethylamino group, an isopropylamino group, an anilino group, a toluidino group, a xylidino group; a carboxyl group, also called a carboxylic acid group (-COOH)); an alkoxycarbonyl group such as a methoxycarbonyl group, an ethoxycarbonyl group or an isopropoxycarbonyl group; an acyloxy group such as acetoxy group or a benzoxy group, an alkoxyl group such as a methoxy group, an ethoxy group, an isopropoxy group, a buthoxy group or a phenoxy group; a polyoxyalkylene group; a mercapto group; an aryl group (other than a phenyl group); an acyl group such as an acryloyl group, a methacryloyl group or a methacryloxypropyl group; or a polyether group, introduced as the group reactive with the inorganic powder, as at least one of R¹, R², R³ and R⁴.

### FIRST STEP OF MIXING AND TREATING THE POWDER IN DRIED STATE

In the present invention, a first step 40 is carried out wherein such a silicone oil is added to the inorganic powder in the form of an aqueous emulsion, followed by mixing and stirring in a substantially dried state for surface treatment of the powder.

The aqueous emulsion of the silicone oil is used as a so-called O/W type emulsion prepared by intensely stirring the above silicone oil in an aqueous medium together with a suitable surfactant to disperse the silicone oil in the aqueous medium in the form of fine droplets.

### SURFACTANT

As the surfactant to be used in the present invention, it is possible to use any of an ionic surfactant such as an anionic surfactant, a cationic surfactant or an amphoteric surfactant and a nonionic surfactant. Among them, it is particularly preferred that at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.

Further, a nonionic surfactant is particularly preferred from such a viewpoint that adjustment of the hydrophilicity/lipophilicity is easy, and it is possible to form a more stable and fine silicone oil emulsion. As such a nonionic surfactant, the following may, for example, be mentioned.

A sorbitan fatty acid ester such as sorbitan monolaurate, sorbitan monopalmitate, sorbitan monostearate, sorbitan distearate, sorbitan tristearate, sorbitan monooleate, sorbitan dioleate or sorbitan trioleate;
a polyoxyethylene sorbitan fatty acid ester such as polyoxyethylene sorbitan monolaurate, polyoxyethylene sorbitan monopalmitate, polyoxyethylene sorbitan monostearate, polyoxyethylene sorbitan distearate, polyoxyethylene sorbitan tristearate, polyoxyethylene sorbitan monooleate, polyoxyethylene sorbitan dioleate or polyoxyethylene sorbitan trioleate;
a polyoxyethylene fatty acid ester such as polyoxyethylene monolaurate, polyoxyethylene monostearate, polyoxyethylene monooleate or polyoxyethylene distearate;
a polyoxyethylene alkyl ether such as polyoxyethylene lauryl ether, polyoxyethylene cetyl ether, polyoxyethylene stearyl ether, polyoxyethylene oleyl ether or polyoxyethylene nonylphenyl ether; and a polyoxyethylene alkylphenyl ether.

Among the above, a fatty acid ester type is most preferred particularly in a case where it is used in a field where a higher safety is required.

Whereas, the anionic surfactant may, for example, be a higher alkyl sulfuric acid ester; a fatty acid soap; an alkyl ether sulfuric acid ester; a higher fatty acid amido sulfonate; an N-acyl sarcosinate; a sulfosuccinate; a phosphoric acid ester; an alkylbenzene sulfonate; or an N-acylamino acid type such as N-coconut oil fatty acid acyl-L-glutamic acid triethanolamine, N-lauroyl-L-glutamic acid triethanolamine, N-coconut oil fatty acid acyl-L-glutamic acid sodium, N-lauroyl-L-glutamic acid sodium, N-myristoyl-L-glutamic acid sodium, N-stearoyl-L-glutamic acid sodium, N-coconut oil fatty acid-hardened tallowate acyl-L-glutamic acid sodium, N-stearoyl-L-glutamic acid sodium, N-coconut oil fatty acid acyl-L-glutamic acid potassium, N-coconut oil fatty acid acyl-L-glutamic acid, N-stearoyl-L-glutamic acid, or N-lauroyl-L-asparagic acid sodium. Among them, an N-acylamino acid type is most preferred in a case where it is used in a field where a higher safety is required.

Further, the cationic surfactant may, for example, be an alkyl trimethyl ammonium salt or a dialkyl dimethyl ammonium salt.

Further, the amphoteric surfactant may, for example, be an imidazoline surfactant or a betaine surfactant.

The amount of the surfactant to be used is not particularly limited. However, it is usually at a level of from 1 to 50 parts by mass, preferably from 5 to 30 parts by mass, more preferably from 10 to 20 parts by mass, per 100 parts by mass of the silicone oil.

### HIGH-PRESSURE EMULSIFICATION STEP

In the present invention, a silicon compound such as silicone oil is emulsified in an aqueous medium in the presence of a surfactant to prepare an aqueous emulsion 30 of the silicon compound. The amount of the aqueous medium to be used, is not particularly limited, but it is usually from 20 to 200 parts by mass, preferably from 60 to 160 parts by mass, more preferably from 80 to 120 parts by mass, per 100 parts by mass of the silicone oil. Further, such emulsification is preferably carried out in a high-pressure emulsification step.

This high pressure emulsification is a method wherein by a high pressure pump, a liquid comprising the silicon compound to be emulsified, a surfactant and an aqueous medium, is pressurized to a high pressure and injected into a capillary tube, whereby it is permitted to flow in the capillary tube at a ultrahigh speed, and due to the accompanying shearing force, impingement to the capillary tube wall surface and to the fluid itself, cavitation, etc., extremely fine dispersed particles will be formed without using any dispersion media such as a ball mill, etc.

Namely, more specifically, the silicon compound, the surfactant and the aqueous medium are firstly pressurized by a high-pressure pump to a level of e.g. from 1 to 300 MPa (from 10 to 3,000 kg/cm²). Then, this pressurized liquid is injected into a unit having a slender path such as a slender groove, a capillary tube, a slender pipe, an orifice or the like (hereinafter referred to as "a slender groove or the like") (which is usually called a "generator" or "nozzle"). Usually, the diameter of the slender groove or the like is at a level of from 20 µm to 1 mm. The injected pressurized fluid is permitted to flow at an ultrahigh speed (e.g. from 100 to 800 m/sec) in the slender path such as the slender groove or the like.

Such an ultrahigh speed stream will firstly be formed into fine particles by a shearing force with the wall of the slender groove or the like. (The flow rate at the wall surface of the fluid is 0, while the center speed in the slender groove or the like is at a super high speed of e.g. 800 m/sec, whereby a sharp velocity gradient is present, and accordingly, it is understood that an extremely large shearing force will thereby be formed.)

Further, a plurality of slender grooves or the like running in parallel with one another are formed, and such a plurality of slender grooves or the like are bent at an intermediate point of the flow path at 90° to face one another so that the respective streams will join at the front, whereby the high speed streams will crush head on and will be formed into fine particles by the large impact. In such a case, the high speed stream will be formed into fine particles also by the impact when it will collide at the bent portions (or corner portions) of the wall surface of the slender grooves or the like.

Still further, in the slender tube such as the slender groove or the like, the fluid is permitted to flow at an ultrahigh speed, and its pressure (static pressure) rapidly decreases, and the pressure is rapidly released from the ultrahigh pressure state, whereby a vigorous cavitation will occur to form fine particles. Namely, by such a reduced pressure, in the flow path, the pressure becomes lower than the vapor pressure of water, and fine steam bubbles will be formed in a large amount, whereby particles will be rapidly dispersed and refined.

In the high-pressure emulsification step, the above mentioned plural refining mechanisms will be generated and combined, whereby in principle, extremely fine and uniform fine particles will be formed without using wet pulverization media or the like. The above mentioned various refining mechanisms are combined, but among them, particularly one composed mainly of collision of the high speed streams to one another and the collision mechanism of the high speed stream against the wall surface of the bent portion of the slender grooves or the like will be referred to as "a collision type high-pressure emulsification device". Further, one composed mainly of a mechanism by a shearing force of the high speed stream with the wall surface at the time when the high speed stream is permitted to flow at an ultrahigh speed in tubes such as a plurality of slender grooves or the like (including orifices) may sometimes be referred to as "a pass through type high-pressure emulsification device".

Further, an emulsified product obtained by one operation (one pass) may be supplied again as a liquid for re-treatment to a high-pressure emulsifying device, and emulsification treatment may be repeated. Namely, the high-pressure emulsification step may be repeated plural times. For example, from 2 to 10 pass, preferably from 3 to 6 pass high-pressure emulsification treatment may be carried out. In the case of one pass, the relative particle size distribution is broad, and by repeating pass, it will be possible to obtain a dispersion which is finer and has a sharp particle size distribution, i.e. having a uniform particle size, such being preferred.

Practical high-pressure emulsifying apparatus are commercially available from various companies, and depending upon the desired particle size, the particle size distribution, the production quantity, etc., a desired high-pressure emulsifying apparatus may be obtained and applied. For example, Nanomaizer (manufactured by YOSHIDA KIKAI CO., LTD., manufactured by Nanomizer K.K.), Microfluidizer (manufactured by Microfluidics Co. Ltd.), Ultimizer (manufactured by SUGINO MACHINE LIMITED) or Microfluidizer (manufactured by Mizuho Kogyo K.K.) may, for example, be mentioned.

### PRELIMINARY MIXING

The silicone oil and the aqueous medium have no mutual compatibility and tend to be separated into two phases, and accordingly, before carrying out the practical emulsification step (the main emulsification step) it is preferred to preliminarily mixing the two to be uniform to some extent by a method such as stirring

### (preliminary emulsification).

When such a preliminary mixing is carried out, a common method is sufficient such as stirring with a usual stirring machine by an addition of a surfactant. As the stirring machine, an optional one may be used such as a propeller type stirring machine, a paddle type stirring machine, an anchor type stirring machine, a homomixer, an ultramixer, a colloid mill, a ball mill, a sand mill or a roll mill.

In the present invention, it is most preferred to prepare an aqueous emulsion of silicone oil by a high-pressure emulsification step as described above, each time for use. Otherwise, in some cases, it is possible to suitably select the following commercially available one for use as an aqueous emulsion type. Further, in the present invention, the aqueous medium means a solvent composed mainly of water, and it may contain in addition to pure water a small amount of an organic solvent or the like other than water. The amount of the organic solvent which may be contained, may be suitably selected for use.

### AQUEOUS EMULSION

As an aqueous emulsion of so-called straight silicone oil, PolonMR, PolonMWS or PolonMK-206 (each being methylhydrogen silicone oil, manufactured by Shin-Etsu Chemical Co., Ltd.) may, for example, be mentioned.

Further, as an aqueous emulsion of a modified silicone oil, PolonMF-18, PolonMF-24 or Softenerseal-10 (each being an epoxy-modified silicone oil emulsion), or PolonMF-14, PolonMF-14D, PolonMF-14EC, PolonMF-29, PolonMF-39, PolonMF-44, PolonMF-52, KM907 or X-52-2265 (each being an amino-modified silicone oil emulsion) (each manufactured by Shin-Etsu Chemical Co., Ltd.); LE-9300, FZ-315 or FZ-4602 (each being an epoxy-modified silicone oil emulsion), FZ-4632, FZ-4635, FZ-4640, FZ-4645, FZ-4658, FZ-4671 or FZ-4678 (each being an amino-modified silicone oil emulsion), FZ-4633 or FZ-4638 (each being a carboxyl-modified silicone oil emulsion), or FZ-2105 (a polyether-modified silicone oil) (each manufactured by Nippon Unicar Company Limited); SM8704C/SM8904 (an amino-modified silicone oil emulsion), or HMW2220 (a divinyl-modified silicone oil emulsion) (each manufactured by Dow Corning Toray Silicone Co., Ltd.); TEX153 (an amino modified silicone oil emulsion), XS65-B8865 (an epoxy-modified silicone oil emulsion), XA69-B5476 (an amino polyether-modified silicone oil emulsion) (each manufactured by GE Toshiba Silicone Co., Ltd.), may, for example, be mentioned.

In the present invention, the aqueous emulsion 30 of the specific silicon compound prepared as described above, is added to the inorganic powder 10 as the base material, and while mixing and stirring in a substantially dried state, the surface treatment of the powder (first step) 40 is firstly carried out by a powder mixing apparatus.

### POWDER MIXING APPARATUS

The apparatus to carry out the first step is not particularly limited so long as it is an apparatus which is capable of accommodating the inorganic powder and capable of carrying out its surface treatment while mixing and stirring the powder by supplying the aqueous emulsion of a silicon compound such as silicone oil while efficiently stirring the inorganic powder. Namely, a stationary type apparatus to accommodate the inorganic powder or a usual solid mixing apparatus provided with a self-rotary container and/or solid-stirring vanes, may be used. For example, it is possible to suitably use an apparatus such as a V-type mixer, a double conical mixer, a ribbon mixer, a rotary or continuous Muller mixer, a vertical screw mixer, or a single or double-rotor mixer, preferably provided with an aqueous emulsion-supplying nozzle or dropwise-adding means. Further, in a case where a small amount of an inorganic powder is to be treated, it is also possible that a small size container containing the inorganic powder and the aqueous emulsion is set to a mixing instrument capable of imparting a movement such as rotation, shaking, vibration, swirling movement, reciprocating movement, up and down movement or piston movement, and a desired mixing motion such as rotation or shaking is imparted to the small container. As such an apparatus, a tumbler shaker mixer (manufactured by SHINMARU ENTERPRISES CORPORATION) may, for example, be mentioned.

At the time of carrying out the first step, the mass ratio, by solid content base, of the silicon compound to the inorganic powder may vary depending upon the type, particularly the specific surface area or pore volume, of the inorganic powder. Usually, the mass ratio of the , silicon compound/the mass ratio of the inorganic powder = from 0.1/100 to 50/100, preferably from 0.1/100 to 20/100. If the amount of the silicon compound is too small, it tends to be difficult to sufficiently impart the water repellency. On the other hand, if the amount of the silicon compound exceeds too much, no further water repellency may be imparted, such being economically meaningless. Here, the supplied silicon compound will be fixed on the surface of the inorganic powder substantially entirely in accordance with the material balance.

The mass of the silicon compound should, in principle, be the mass required to cover the outer surface and pore inner surface (particularly the specific surface area) of the inorganic powder. However, by a study made by the present inventors, it has been found that on the basis of the pore volume or oil absorption, if an amount of the aqueous emulsion of the silicon compound substantially corresponding thereto is used, it is possible to carry out the mixing and stirring substantially free from wetting or in a dried state free from slurring and it is thereby possible to impart satisfactory water repellency.

The time for the surface treatment by mixing and stirring in the first step may vary depending upon the type of the powder to be treated, the amount of the powder to be treated, the type and amount of the aqueous emulsion of the silicon compound, and the temperature, etc. of the inorganic powder. However, it is usually from one minute to 6 hours, preferably from 10 minutes to 3 hours. The first step is sufficiently carried out at room temperature without particularly heating, but in some cases, it may be carried out at a temperature of from 20 to 90°C, preferably from 30 to 60°C. When the first step is carried out under warming or heating, it is preferred to use the above mentioned solid mixer which is further provided with a heating means.

### HEAT TREATMENT-BAKING STEP: SECOND TREATMENT STEP

In the present invention, a second step 50 is carried out wherein the powder treated in the first step is heated to bake the silicon compound to the surface of the inorganic powder and at the same time to separate the aqueous medium 20'c of the above mentioned emulsion.

### HEATING-DRYING APPARATUS

Under the heating and drying conditions, water or the like as the aqueous medium is evaporated and removed from the inorganic powder treated with the silicon compound. It is considered that in this step, the silicon compound such as silicone oil dispersed in the aqueous medium will be close together without evaporation and will be baked to the outer surface and particularly pore inner surface of the inorganic powder while it forms a coating film.

As a preferred drying apparatus to carry out heating and drying to provide such a function, any one of common drying apparatus may be suitably used. For example, various drying machines may be used including e.g. a box type drying machine, a vented drying machine, a tunnel drying machine, a spray drying machine, a fluidized bed drying machine, a medium fluidized bed drying machine and an air circulating rotary dryer. The heating source is not particularly limited, and it may, for example, be, steam, a heated medium, electrical heating or infrared ray heating. In some cases, a suitable heating means may be added to the solid mixing apparatus which is used in the first step, so that after carrying out the first step, heating treatment may be carried out in the solid mixing apparatus.

The heating treatment in the second step is carried out at a temperature at which the silicon compound is firmly baked to the surface, particularly to the inner surface of pores, of the inorganic powder. It is carried out usually at from 50 to 250°C for from 30 minutes to 12 hours, preferably at from 80 to 200°C for from 40 minutes to 10 hours, more preferably at from 100 to 190°C for from 1 to 8 hours.

The inorganic powder 60 treated with the silicon compound as described above has high water repellency imparted, and is, for example, one which does not sediment even upon expiration of 24 hours after being put in water.

Further, according to the present invention, as described in the following Examples, an aqueous emulsion of a silicon compound such as silicone oil having a group reactive with an inorganic powder is added to the inorganic powder; the inorganic powder is subjected to surface treatment by mixing and stirring in a substantially dried state; and the powder is further heated to bake the silicon compound to the powder surface, whereby as compared with a conventional case wherein surface treatment is carried out by using a silicon compound dissolved in an organic solvent, it is possible to produce an inorganic powder having high water repellency by a substantially small amount of the silicon compound.

Namely, many hydrophilic groups such as silanol groups are present on the surface of the inorganic powder (particularly on the inner surface of pores in the case of porous particles) which is required to be treated for water repellency, whereby an aqueous medium has a higher affinity to such groups and can readily wet such a surface. Accordingly, even with an amount smaller than the amount of the medium required to completely fill the pores, the surface in the pores can sufficiently be wetted, and the surface can substantially be sufficiently covered with silicone oil. Whereas, in a case where an organic solvent such as ethyl acetate which is commonly used for silicone oil, is used, the surface tends to be hardly wetted due to the hydrophilic groups on the surface, and in order to completely wet the inner surface of pores, a sufficient amount of the solvent to completely fill the pores will be required, and the solvent in an amount far larger than the aqueous medium is considered to be required.

Further, in the inorganic powder treated with a silicon compound of the present invention, the silicon compound stably covers the surface of the particles. Accordingly, when such treated particles are put and dispersed in a polar organic solvent or a non-polar organic solvent, in the case of either solvent, the silicon compound will not be substantially re-dissolved in the organic solvent.

Namely, the stability of the coating film of the silicon compound can be evaluated by "the silicon compound-remaining ratio" (hereinafter sometimes referred to simply as "the silicon remaining ratio") as defined hereinafter. The silicon-remaining ratio of the inorganic powder surface-treated with a silicon compound of the present invention is extremely excellent at a level of at least 90% in the case of either the polar or non-polar organic solvent, and may be evaluated that substantially there is no re-dissolution.

### METHOD FOR EVALUATION OF SILICON REMAINING RATIO

1 g of an inorganic powder obtained by surface treatment with the silicon compound, was put and dispersed in 10 g of a polar organic solvent or a non-polar organic solvent, and the dispersion is left to stand at room temperature for 24 hours. Then, the obtained slurry dispersion is subjected to solid-liquid separation by means of a filter paper having an aperture of 0.5 µm, and the separated powder is dried at 120°C for 2 hours. With respect to the obtained dried powder, the total carbon ratio is measured by a total nitrogen-carbon-measuring machine (model: SUMGRAPH NC-80, manufactured by Sumika Chemical Analysis Service, Ltd.). The measured total carbon ratio is divided by the previously measured total carbon ratio of the blank treated powder, to calculate the total carbon remaining ratio (%) in the treated powder in the above polar organic solvent or non-polar organic solvent. The calculated total carbon remaining ratio and the silicon remaining ratio are the same as the ratio, and thus, the silicon-remaining ratio is obtained.

The silicon remaining ratio (the remaining ratio is mass%) is an index showing the degree of re-dissolution of the silicon compound covering the surface of the inorganic powder, and when this value is close to 100%, such shows that the silicon compound is stably fixed on the particle surface, and re-dissolution is prevented. Substantially, the silicon remaining ratio is preferably at least 90%, particularly preferably at least 95%.

As shown in the following Examples, the inorganic powder of the present invention has its silicon remaining ratio of at least 90% in either polar organic solvent or non-polar solvent and is a stabilized treated powder substantially free from re-dissolution. The solvent capable of maintaining the silicon remaining rate of at least 90% is not particularly limited. However, with a view to suppressing the material transfer caused by an interaction with the solvent at the surface of particles, preferred is a solvent having a solubility in water as a solvent being at least 0.02% at 25°C or an octanol/water distribution coefficient of at most 3 as an index for the hydrophilicity or the hydrophobicity. Specifically, as a polar organic solvent, methanol, ethanol, 1-propanol, lauryl alcohol, butanol, glycerol, ethylene glycol, propylene glycol, carbitol (diethylene glycol monoethyl ether), cellosolve (ethylene glycol monoethyl ether), acetone, acetic acid, dioxane, methyl ethyl ketone, methyl isobutyl ketone, isononyl isononanoate or ethyl acetate, may, for example, be mentioned. As a non-polar organic solvent, benzene, toluene, carbon tetrachloride, chloroform, trichloroethylene, perchloroethylene or ethyl ether may, for example, mentioned.

In the case of a powder treated by a usual silicon compound, it is common that in a case where the silicon-remaining ratio is large to a polar organic solvent, the silicon-remaining ratio tends to be low to a non-polar organic solvent, and inversely, in a case where the remaining ratio is high to a non-polar organic solvent, the value tends to be low to a polar organic solvent. Therefore, it can be said "surprising" that as in the present invention, an excellent silicon-remaining ratio is shown to both a polar organic solvent and a non-polar organic solvent.

The reason is not clearly understood, but the silicon compound is considered to be stably fixed by a combination of mechanisms such that as the silicon compound, a silicone oil having a group reactive with the inorganic powder is selected for use; such a specific silicone oil is used for surface treatment in the form of an aqueous emulsion as is opposed to usual treatment; and by a high pressure emulsification step, the silicone oil is sheared into very fine droplets to an emulsion, whereby the contact area of the organic powder and such fine droplets will increase to have the silicone oil fixed on the particle surface with a stronger force.

Further, in the present invention, whether or not the surface of the inorganic powder is treated with a silicon compound such as silicone oil, can easily be ascertained by the water repellency behavior at the time of adding the powder to water, the analysis by FT-IR, or the like.

### EXAMPLES

### PREPARATION EXAMPLE 1: Preparation of emulsion of silicone oil having a group reactive with inorganic powder

As the silicone oil, an ethoxy-modified silicone oil having a group reactive with a silanol group of silica (tradename: KF-9909, manufactured by Shin-Etsu Silicones, kinetic viscosity: 20 mm²/s) was selected. In 500 g of the silicone oil, 75 g of a polyoxyethylene fatty acid ester (tradename: IONET MO-600, manufactured by Sanyo Chemical Industries Ltd.) was dissolved as a surfactant to obtain a solution, to which 425 ml of deionized water was added.

This mixed solution was preliminarily emulsified at 10,000 rpm for 15 minutes by T.K.HOMO MIXER (manufactured by Tokushu Kika Kogyo K.K.). Such a preliminarily emulsified liquid was emulsified by 4-pass treatment by a pass-through type generator having an orifice diameter of 120 µm under a pressure of 120 MPa by means of a high pressure emulsifier (machine name: Nanomaizer mark II, model: NM-2-L200, manufactured by YOSHIDA KIKAI CO., LTD.).

The average particle diameter of such emulsified emulsion particles was 0.16 µm by a laser diffraction/scattering type particle size distribution measuring apparatus (LA-920 model, manufactured by HORIBA LTD.).

### PREPARATION EXAMPLE 2: Preparation of emulsion of silicone oil having no group reactive with inorganic powder

As the silicone oil, dimethyl silicone oil (tradename: KF-96-100CS, kinetic viscosity: 100 mm²/s, manufactured by Shin-Etsu Silicones) was selected. In 500 g of such silicone oil, 74 g of a polyoxyethylene fatty acid ester (tradename: IONET MO-600, manufactured by Sanyo Chemical Industries Ltd.) was dissolved as a surfactant to obtain a solution, to which 425 ml of deionized water was added.

This mixture was prelimiarily emulsified at 10,000 rpm for 15 minutes by T.K.HOMO MIXER (manufactured by Tokushu Kika Kogyo K.K.). Such a preliminarily emulsified liquid was emulsified by 4-pass treatment by a pass-through type generator having an orifice diameter of 120 µm under a pressure of 120 MPa by means of a high pressure emulsifying machine (machine name: Nanomaizer mark II, model: NM2-L200, manufactured by YOSHIDA KIKAI CO., LTD.).

The average particle size of such emulsified emulsion particles was 0.20 µm by a laser diffraction/scattering type particle size distribution measuring apparatus (LA-920 model, manufactured by HORIBA LTD.).

### EXAMPLE 1

(1) As an inorganic powder to be surface-treated, 30 g of spherical silica gel (average particle diameter: 5 µm, specific surface area: 756 m²/g, pore volume: 0.88 ml/g) was used. Further, 0.3 g of the aqueous emulsion of an ethoxy-modified silicone oil prepared in Preparation Example 1 was preliminarily diluted with 26.1 ml of deionized water. Here, the mass ratio, based on solid content, of silica gel : silicone oil emulsion (calculated as silicone oil solid content) = 100 : 0.5.
(2) The inorganic powder was introduced into a polyethylene container having a capacity of 1,000 mL, which was set on a tumbler shaker mixer (manufactured by SHINMARU ENTERPRISES CORPORATION) as a powder mixing machine. While the above mentioned silicone oil emulsion was dividedly added, the powder was thoroughly mixed for 30 minutes for surface treatment in a powder state.
(3) The surface-treated powder mixture was heated to 120°C and dried for 3 hours to obtain the desired silica gel treated for water repellency with the silicone oil. 0.1 g of such a silica gel was put into a beaker containing 50 ml of water, and its water repellency was confirmed, whereby it was confirmed that the silica gel powder had high water repellency without sedimentation at all even after 24 hours.
(4) Further, the silicon-remaining ratio to each organic solvent, of this silica gel treated with silicone oil, was measured, whereby it was 92% to toluene, 92% to chloroform, 95% to isononyl isononanoate, or 98% to methanol.

### EXAMPLE 2

(1) As an inorganic powder to be surface-treated, 30 g of spherical silica gel (average particle diameter: 3 µm, specific surface area: 756 m²/g, pore volume: 0.88 ml/g) was used. Further, 0.3 g of the aqueous emulsion of an ethoxy-modified silicone oil prepared in Preparation Example 1 was preliminarily diluted with 26.1 ml of deionized water. Here, the mass ratio, based on solid content, of silica gel : silicone oil emulsion (calculated as silicone oil solid content) = 100 : 0.5.
(2) The inorganic powder was introduced into a polyethylene container having a capacity of 1,000 mL, and set on a tumbler shaker mixer (manufactured by SHINMARU ENTERPRISES CORPORATION) as a powder mixing machine. While the above silicone oil emulsion was dividedly added, the powder was thoroughly mixed for 30 minutes for surface treatment in a powder state.
(3) The surface-treated powder mixture was heated to 120°C and dried for 3 hours to obtain the desired silica gel treated for water repellency with the silicone oil. 0.1 g of this silica gel was put into a beaker containing 50 ml of water in the same manner as in Example 1 to confirm its water repellency, whereby it was confirmed that the silica gel powder had high water repellency without sedimentation at all even after 24 hours.
(4) Further, the silicon-remaining ratio to each organic solvent, of this silica gel treated with silicone oil, was measured, whereby it was 90% to toluene, 93% to chloroform, 95% to isononyl isononanoate, or 97% to methanol.

### EXAMPLE 3

(1) As an inorganic powder to be surface-treated, 30 g of spherical silica gel (average particle diameter: 5 µm, specific surface area: 703 m²/g, pore volume: 1.85 ml/g) was used. Further, 0.3 g of the aqueous emulsion of an ethoxy-modified silicone oil prepared in Preparation Example 1 was preliminarily diluted with 55.2 ml of deionized water. Here, the mass ratio, based on solid content, of silica gel : silicone oil emulsion (calculated as the silicone oil solid content) = 100 : 0.5.
(2) The inorganic powder was introduced into a polyethylene container having a capacity of 1,000 mL and set on a tumbler shaker mixer (manufactured by SHINMARU ENTERPRISES CORPORATION) as a powder mixing machine. While the above silicone oil emulsion was dividedly added, the powder was thoroughly mixed for 30 minutes for surface-treatment in a powder state.
(3) The surface-treated powder mixture was heated to 120°C and dried for 3 hours to obtain the desired silica gel treated for water-repellency with the silicone oil. 0.1 g of this silica gel was put into a beaker containing 50 ml of water in the same manner as in Example 1, and its water repellency was confirmed, whereby it was confirmed that the silica gel powder had high water repellency without sedimentation at all even after 24 hours.
(4) Further, the silicon-remaining ratio to each organic solvent, of this silica gel treated with silicone oil, was measured, whereby it was 92% to toluene, 92% to chloroform, 96% to isononyl isononanoate, or 96% to methanol.

### COMPARATIVE EXAMPLE 1

(1) As an inorganic powder to be surface-treated, 30 g of spherical silica gel (average particle diameter: 5 µm, specific surface area: 703 m²/g, pore volume: 0.88 ml/g) was used. Further, 18 g of the aqueous emulsion of dimethyl silicone oil prepared in Preparation Example 2 was preliminarily diluted with 8.4 ml of deionized water. Here, the mass ratio, based on solid content, of silica gel : silicone oil emulsion (calculated as the silicone oil solid content) = 100 : 30.
(2) The inorganic powder was introduced into a polyethylene container having a capacity of 1,000 mL and set on a tumbler shaker mixer (manufactured by SHINMARU ENTERPRISES CORPORATION) as a powder mixing machine. While the above silicone oil emulsion was dividedly added, the powder was thoroughly mixed for 30 minutes for surface-treatment in a powder state.
(3) The surface-treated powder mixture was heated to 120°C and dried for 3 hours to obtain the desired silica gel treated for water-repellency with silicone oil. 0.1 g of such a silica gel was put into a beaker containing 50 ml of water in the same manner as in Example 1, and its water repellency was confirmed, whereby it was confirmed that the silica gel powder had high water repellency without sedimentation at all even after 24 hours.
(4) However, when the silicon-remaining ratio to each organic solvent, of this silica gel treated with silicone oil, was measured, it was 73% to toluene, 72% to chloroform, 83% to isononyl isononanoate or 95% to methanol.

### COMPARATIVE EXAMPLE 2

(1) As an inorganic powder to be surface-treated, 30 g of spherical silica gel (average particle size: 5 µm, specific surface area: 703 m²/g, pore volume: 1.85 ml/g) was used. Further, 18 g of the aqueous emulsion of dimethyl silicone oil prepared in Preparation Example 2 was preliminarily diluted with 37.5 ml of deionized water. Here, the mass ratio, based on solid content, of silica gel : silicone oil emulsion (calculated as silicone oil solid content) = 100 : 30.
(2) The inorganic powder was introduced into a polyethylene container having a capacity of 1,000 mL and set on a tumbler shaker mixer (manufactured by SHINMARU ENTERPRISES CORPORATION) as a powder mixing machine. While the above silicone oil emulsion was dividedly added, the powder was thoroughly mixed for 30 minutes for surface-treatment in a powder state.
(3) The surface-treated powder mixture was heated to 120°C and dried for 3 hours to obtain the desired silica gel treated for water-repellency with silicone oil. 0.1 g of such a silica gel was put into a beaker containing 50 ml of water in the same manner as in Example 1, and its water repellency was confirmed, whereby it was confirmed that the silica gel powder had high water repellency without sedimentation at all even after 24 hours.
(4) However, when the silicon-remaining ratio to each organic solvent, of this silica gel treated with silicone oil, was measured, it was 70% to toluene, 68% to chloroform, 81% to isononyl isononanoate, or 97% to methanol.

### COMPARATIVE EXAMPLE 3

(1) As an inorganic powder to be surface-treated, 30 g of spherical silica gel (average particle size: 5 µm, specific surface area: 756 m²/g, pore volume: 0.88 ml/g) was used. Further, 0.3 g of the aqueous emulsion of dimethyl silicone oil prepared in Preparation Example 2 was preliminarily diluted with 8.4 ml of deionized water. Here, the mass ratio, based on solid content, of silica gel : silicone oil emulsion (calculated as silicone oil solid content) = 100 : 0.5.
(2) The inorganic powder was introduced into a polyethylene container having a capacity of 1,000 mL and set on a tumbler shaker mixer (manufactured by SHINMARU ENTERPRISES CORPORATION) as a powder mixing machine. While the above silicone oil emulsion was dividedly added, the powder was thoroughly mixed for 30 minutes for surface-treatment in a powder state.
(3) The surface-treated powder mixture was heated to 120°C and dried for 3 hours to obtain the desired silica gel treated for water-repellency with silicone oil. 0.1 g of such a silica gel was put into a beaker containing 50 ml of water in the same manner as in Example 1, and its water repellency was confirmed, whereby the silica gel powder sedimented in water immediately after the the introduction, and no water repellency was obtained.
(4) The silicon-remaining ratio to each organic solvent, of this silica gel treated with silicone oil, was measured, whereby it was 75% to toluene, 76% to chloroform, 79% to isononyl isononanoate, or 93% to methanol.

### INDUSTRIAL APPLICABILITY

According to the present invention, it is possible to provide a stable water-repellent inorganic powder substantially free from re-dissolution of the silicon compound used for the surface treatment whether the inorganic solvent is polar or non-polar.

Further, it is possible to provide a process for producing a water-repellent inorganic powder, wherein such treatment of an inorganic powder for water repellency is effectively carried out by using, as a dispersing medium for the silicon compound, its aqueous emulsion without using an organic solvent.

The stable inorganic powder treated with a silicon compound and having a high water repellency, obtained by the process of the present invention, is suitably used as e.g. a filler, a pigment or a catalyst, to be incorporated to cosmetics, resins, coating materials, printing inks, rubbers, etc.

The entire disclosure of Japanese Patent Application No. 2005-377091 filed on December 28, 2005 including specification, claims, drawings and summary is incorporated herein by reference in its entirety.

## Claims

1. A water-repellent inorganic powder which is surface-treated with a silicon compound, wherein the silicon compound is one having a group reactive with the inorganic powder, and when the inorganic powder is dispersed in any of polar organic solvents and non-polar organic solvents, the retention of the silicon compound is at least 90%.

2. The water-repellent inorganic powder according to Claim 1, wherein the silicon compound is an aqueous emulsion of any of methylhydrogen silicone oil, alkoxy-modified silicone oil, amino-modified silicone oil, epoxy-modified silicone oil, polyether-modified silicone oil or carboxyl-modified silicone oil.

3. The water-repellent inorganic powder according to Claim 2, wherein to the aqueous emulsion, at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.

4. The water-repellent inorganic powder according to Claim 1 or 2, wherein the mass ratio, based on the solid content, of the silicon compound to the inorganic powder (i.e. the mass of the silicon compound/the mass of the inorganic powder) is from 0.1/100 to 20/100.

5. The water-repellent inorganic powder according to Claim 1, wherein the inorganic powder is porous particles having a specific surface area of from 5 to 2,000 m²/g and a pore volume of from 0.01 to 5.0 ml/g.

6. The water-repellent inorganic powder according to any one of Claims 1 to 5, wherein the inorganic powder is a spherical silica gel or an irregular silica gel.

7. A process for producing the water-repellent inorganic powder as defined in Claim 1, which comprises a first step of adding to an inorganic powder an aqueous emulsion of a silicon compound having a group reactive with the inorganic powder, followed by mixing and stirring in a substantially dried state for surface-treating the inorganic powder, and a second step of heating the treated inorganic powder to bake the silicon compound to the surface of the inorganic powder and at the same time, separating the aqueous medium of the aqueous emulsion.

8. The process for producing the water-repellent inorganic powder according to Claim 7, wherein the silicon compound is an aqueous emulsion of any of methylhydrogen silicone oil, alkoxy-modified silicone oil, amino-modified silicone oil, epoxy-modified silicone oil, polyether-modified silicone oil or carboxyl-modified silicone oil.

9. The process for producing the water-repellent inorganic powder according to Claim 8, wherein to the aqueous emulsion, at least one surfactant selected from the group consisting of a sorbitan fatty acid ester type, a polyoxyethylene sorbitan fatty acid ester type, a polyethylene glycol fatty acid ester type, a polyoxyethylene fatty acid ester type, an N-acylamino acid type, a polyoxyethylene alkyl ether type and a polyoxyethylene alkylphenyl ether type, is incorporated.

10. The process for producing the water-repellent inorganic powder according to Claim 7 or 8, wherein the mass ratio, based on the solid content, of the silicon compound to the inorganic powder (i.e. the mass of the silicon compound/the mass of the inorganic powder) is from 0.1/100 to 20/100.

11. The process for producing the water-repellent inorganic powder according to Claim 7, wherein the inorganic powder is porous particles having a specific surface area of from 5 to 2,000 m²/g and a pore volume of from 0.01 to 5.0 ml/g.

12. The process for producing the water-repellent inorganic powder according to any one of Claims 7 to 11, wherein the surface treatment in the first step is carried out from 1 minute to 6 hours.

13. The process for producing the water-repellent inorganic powder according to any one of Claims 7 to 12, wherein the heat treatment in the second step is carried out at from 50 to 250°C from 30 minute to 12 hours.

14. The process for producing the water-repellent inorganic powder according to any one of Claims 7 to 13, wherein the inorganic powder is a spherical silica gel or an irregular silica gel.
